# EUROPEAN PATENT APPLICATION

(11) **EP 1 612 589 A1**
(43) Date of publication of application: **04.01.2006**
(21) Application number: 05105912.9
(22) Date of filing: 30.06.2005
(51) Int. Cl.: G02B 6/38

(54) **Small form factor field-installable optical connector**

(30) Priority: 30.06.2004 US 584367
(71) Applicant: TYCO Electronics Corporation, Middletown, PA 17057-3163 (US)
(72) Inventor: Manning, Randy Marshall, 17043, Lemoyne (US); Erdman, David Donald, 17036, Hummelstown (US); Gurreri, Michael lawrence, 17404, York (US)
(74) Representative: Johnstone, Douglas Ian

(57) **Abstract**

A small form factor, field-installable optical connector (10) comprising: (a) a small form factor connector housing (12) having a front and a back end; (b) a ferrule (13) disposed in the connector housing (12); (c) a clamping assembly (11) disposed in the connector housing (12) rearward of the ferrule (13) and adapted to receive and retain a terminating fiber; (d) a resilient member (15) disposed in the connector housing (12); and (e) a rear body (16) disposed at the rear end of the connector housing (12) and configured to provide a backstop against which the resilient member (15) can press to bias the ferrule (13) and the clamping assembly (11) forward.

## Description

This application claims priority to U.S. Provisional Application No. 60/584,367, filed June 30, 2004, which is hereby incorporated in its entirety.

The present invention relates generally to a field installable connector, and, more specifically, to a small form factor, field-installable connector.

Optical fiber connectors are an essential part of practically all optical fiber communication systems. For instance, such connectors are used to join segments of fiber into longer lengths, to connect fiber to active devices such as radiation sources, detectors and repeaters, and to connect fiber to passive devices such as switches and attenuators. The principal function of an optical fiber connector is to optically couple a fiber with the mating device (e.g., another fiber, an active device or a passive device) by holding the end of the fiber such that the core of the fiber is axially aligned with the optical pathway of the mating device.

To effect optical coupling and minimize Fresnel loss, the end of the fiber is commonly presented for mating in a polished ferrule. A polished ferrule assembly is most readily prepared in a controlled setting wherein precision equipment and skilled personnel are available for cleaving the fiber, and terminating it in a ferrule, and polishing the ferrule and fiber to exacting tolerances. However, there is a need for a connector that can be installed in the field where such facilities and personnel are not available. Under these conditions, it is desirable to omit the step of the polishing the ferrule/fiber in the field by instead terminating the fiber in a connector which has a fiber stub already terminated and polished in a ferrule. The terminating fiber is optically coupled to the fiber stub in the connector, often with the use of a refractive index matched gel to improve optical coupling therebetween. The terminating fiber is held in intimate contact with the fiber stub by virtue of a clamping mechanism, which applies a radial force to the terminating fiber to secure it to the connector. Advantageously, this clamping mechanism facilitates straightforward field assembly by obviating the need to handle epoxy and for curing ovens during field termination. Field-installable connectors which have a clamping mechanism are referred to herein as "crimp-type" connectors.

Due to space constraints, recent trends in connector density favor small-form-factor connectors. As used herein, the term "small form factor" refers to a miniaturized connector in which two or more optical transmission lines are housed in a space which is no larger than occupied by a standard single SC-type connector. Examples of small form factor connectors include the LC-type connector from Lucent Technologies, the MU-type connector from NTT, the MPO-type connector from NTT, the LX5 connector from ADC Telecommunications, and the MTRJ and MPX-type connectors from Tyco Electronics.

Unfortunately, existing field-installable fiber optic connectors tend to be of the larger connector types such as the industry-standard SC and ST type connectors. The existing small-form-factor, field-installable connectors are limited in function by their structure. For example, US Patent No. 4,923,274 discloses a field-installable connector design in which the relative rotation of components within a splice assembly cause one component to cam downward and clamp onto the fiber to hold it secure within the connector. Although effective in holding the fiber, this splice assembly occupies significant space making its implementation in small form factor connectors problematic. Specifically, there is not sufficient space around the splice assembly in the connector for resilient means to bias the ferrule forward. Indeed, applicants are not aware of any field-installable, small-form-factor connectors that have a spring-loaded ferrule. Such prior art small form factor, field-installable connectors can reliably mate only with a complimentary spring-loaded connector or device. They are unsuited for mating with fixed interface, non spring-loaded devices such as optical transceivers.

Therefore, a need exists for a small form factor field-installable connector having a ferrule which is biased forward. The present invention fulfills this need among others.

The present invention provides for a spring-loaded, small form factor, field-installable connector by using a space-saving clamping assembly and resilient member coupled with a roomy connector housing. Specifically, in a preferred embodiment, a unique clamping assembly is used which has fewer tapered surfaces and moving parts than those typically used in the prior art. By using fewer moving parts, the clamping assembly is more efficient and lends itself to miniaturization.
This clamping assembly is used preferably with an efficient resilient member design which achieves its resilient properties through elastic material which is aligned axially along the connector rather than radially. This reduces the radial dimension of the resilient member. The combination of the unique clamping assembly and the "axial" resilient member provides for a compact "spring-loaded" mechanism within the connector housing. The connector housing, itself, is designed to be roomy through the use of a unitary configuration which avoids the space-consuming two-piece, telescoping design used in the prior art. The result is a compact field-installable connector which has a small form factor and offers a spring-loaded ferrule.

In a preferred embodiment, the small form factor, field-installable optical connector comprises: (a) a small form factor connector housing having a front and back orientation; (b) a ferrule disposed in the connector housing; (c) a clamping assembly disposed in the connector housing rearward of the ferrule and adapted to receive and retain a terminating fiber; (d) a resilient member disposed in the connector housing; and (e) a rear body disposed at the rear end of the connector housing and configured to provide a backstop against which the resilient member can press to bias the ferrule and the clamping assembly forward.

The invention will now be described by way of example only with reference to the accompanying figures in which:

Figures 1a and 1b show an LC-type connector having the clamping assembly of the present invention in an exploded view and a perspective view, respectively.

Figures 2a and 2b show perspective and an axial cross-sectional views of the housing of the clamping assembly shown in Figures 1a and 1b.

Figure 3a and 3b show perspective and axial cross-sectional views of the platform of the clamping assembly shown in Figures 1a and 1b.

Figures 4a and 4b show perspective and axial cross-sectional views of the first cam member of the clamping assembly shown in Figures 1a and 1b.

Figures 5a through 5c show perspective and axial horizontal and vertical cross-sectional views of the second cam member of the clamping assembly shown in Figures 1a and 1b.

Figures 6a and 6b show perspective and axial cross-sectional views of the actuator of the clamping assembly shown in Figures 1a and 1b.

Figure 7 shows a schematic of resilient side portions extending up from the platform to urge the first cam member upward.

Figure 8a shows an axial cross-sectional view of the LC-type connector shown in Figure 1b, fully assembled and in a pre-actuation position.

Figure 8b shows a detailed section of the clamping assembly of Figure 8a.

Figure 9 shows a detailed section of the clamping assembly of Figure 8a in a post-actuated state.

Figure 10 shows a prior art LC-type connector having a two-part connector housing.

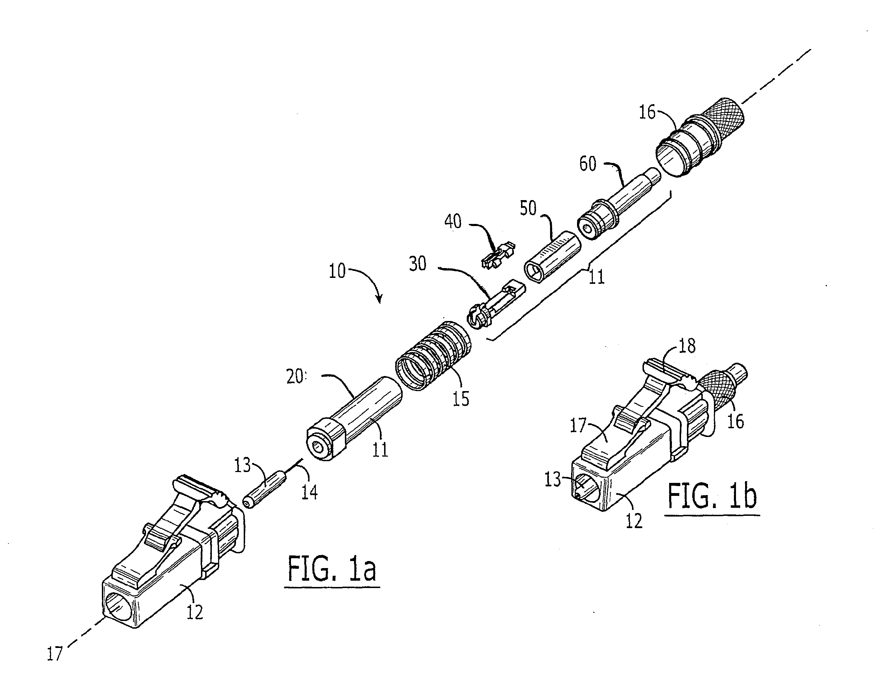

Referring to Figure 1a, a preferred embodiment of an LC-type connector 10 comprising a clamping assembly 11 of the present invention is shown in an exploded view. The connector 10 and clamping assembly 11 are described herein with respect to a top/bottom and front/back orientation. It should be understood that reference is made to this orientation for purposes of illustration and to describe the relative position of the components within a given connector. It should be therefore understood that this orientation is not an absolute orientation and that rotating, inverting or otherwise altering the connector's position in space is possible without changing the relative position of the components of the connector. Additionally, the connector 10 has at least one optical axis 17. The optical axis 17 corresponds to the axis along which light propagates in the terminated connector. It should be understood that the connector may have more than one optical axis if the connector is used to couple more than one fiber. For purposes of simplicity, however, the connector of the present invention will be described herein only with respect to a single optical axis.

The connector 10 of the present invention is described herein in both its pre-actuated state and post-actuated state. In the pre-actuated state, the clamping assembly has not been actuated so the terminating fiber (not shown) is not secured to the connector. In the post-actuated state, the clamping assembly has been actuated such that the connector is secured to the terminating fiber. As used herein, the terms "fiber" or "terminating fiber" refer to the optical fiber which is inserted into the back of the connector and secured to the connector. As discussed below, this fiber may be clamped in the connector 10 such that its end face is presented in the end face of the ferrule, or, more preferably, it is clamped such that its end face abuts a fiber stub, which, in turn, has an end face presented in the ferrule.

Referring to Figure 1a, the small-form factor LC-type connector 10 is disclosed. Specifically, the connector 10 comprises a connector housing 12, and a ferrule 13, which, when assembled, projects from the front of the connector housing as shown in Figure 1b. In this particular embodiment, the ferrule contains a fiber stub 14 which extends rearwardly therefrom and into a clamping assembly 11 behind the ferrule 13. The combination of the ferrule 13 and the clamping assembly 11 is urged forward relative to the connector housing 12 by a resilient member 15. A rear body 16 is disposed at the rear end of the connector housing 12 and is configured to provide a backstop against which the resilient member 15 can press to bias the ferrule 13 and clamping assembly 11 forward. Each of these components is discussed in greater detail below.

### Connector Housing 12

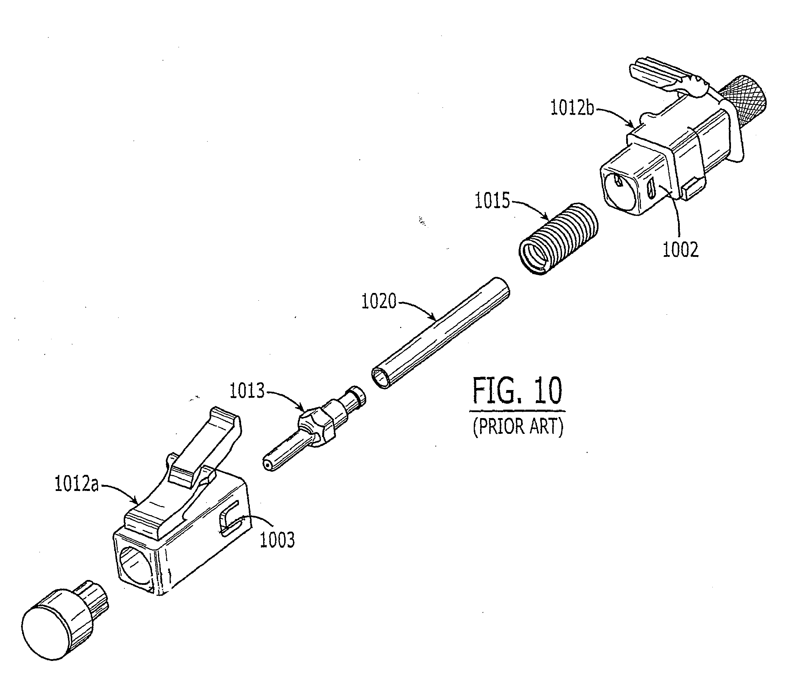

The connector housing 12 is preferably a one-piece construction rather than a typical two-piece nested construction used for factory-terminated, epoxy-type connector as specified in the LC connector standard, TIA-604-10 FOCIS 10. For example, referring to Fig. 10, a prior art LC-type connector is show in an exploded view with a forward connector housing 1012a and a rear connector housing 1012b. (This factory-terminated epoxy design also comprises a sheath 1020 for channeling away adhesive from the ferrule assembly 1013 and away from the resilient means 1015.) Since a narrow portion 1002 of the rear connector housing 1012b telescopes into the rear portion 1003 of the front connector housing 1012a, the interior space within the connector housing combination is necessarily diminished. The single-piece design of the preferred embodiment avoids these "layers" of connector housings, thereby providing additional space within the small cross section for the clamping assembly 11 and resilient member 15.

A releasable latch 17 for retaining the assembled connector into a mating receptacle is integral to the connector housing 12. A second latch 18, integral to the connector housing, may also be provided so that when it is depressed by finger pressure it will in turn actuate the releasable latch and provide an anti-snagging feature.

Preferably, the one-piece connector housing is integrally molded of thermoplastic material having the integral single releasable latch 17 or both the integral releasable latch 17 and the second latch 18. The thermoplastic material may be for example PES, PEI, PBT or LCP.

### Ferrule 13

The ferrule 13 is shown containing a stub fiber 14 which is secured to the ferrule using a traditional adhesive such as epoxy. The end face 14a of a fiber 14 is presented on the front face 13a of the ferrule 13. The fiber stub preferably is affixed and polished in the ferrule in a controlled environment where precise polishing equipment and skilled personnel are available. Although the fiber stub is shown extending from the back of the ferrule for coupling with the terminating fiber in clamping assembly, a much shorter fiber stub may be used which does not protrude from the back end of the ferrule. In such a configuration, the fiber stub would optically couple in the ferrule 13 with a terminating fiber which extends forward from the clamping assembly. In still another embodiment, no fiber stub is used as mentioned above. Furthermore, if the clamping assembly of the present invention is used in a splicing application, a mating fiber, rather than a fiber stub, would meet the terminating fiber in the clamping assembly 11.

### Resilient Member 15

In a preferred embodiment, the resilient member 15 is a flat spring. In other words, rather than having of the resilient material of the member extend radially, it is oriented axially with respect to the connector. In a more preferred embodiment, the flat spring is a spring made of rectangular wire wound on edge to minimize the outside diameter of the spring. The spring material may comprise any resilient material including music wire or stainless steel.

### Rear Body 16

The rear body 16 retains the clamping assembly and the biasing spring in the connector housing, providing a surface against which one end of the biasing spring is seated in a fixed position relative to the connector housing. Additionally, the rear body provides an anchor point for terminating the strength members in a reinforced optical fiber cable. The rear body is affixed to the connector housing by means of an interference fit between an outside surface of the rear body and an internal surface of a cavity formed in the rear of the connector housing. Barbs or knurling on the outside surface of the rear body that interferes with the connector housing further enhance the fixing of the rear body to the connector housing.

Thermal or ultrasonic heating of the rear body 16 may be used to locally melt the material of the connector housing in contact with the rear body to further enhance retention.

### Clamping Assembly 11

The clamping assembly 11 is disposed behind the ferrule. The clamping assembly serves to secure the terminating fiber to the connector such that the fiber cannot be pulled from the connector under ordinary force. To this end, the clamping assembly imparts a radial force upon the fiber to increase the friction between the fiber and the connector. In a preferred embodiment, the clamping assembly clamps a terminating fiber such that the fiber is optically coupled to a stub fiber which has been pre-terminated and polished in the ferrule 13. Alternatively, the clamping assembly clamps a terminating fiber to the connector such that its end is presented at the front face 13a of the ferrule 13 (i.e., no fiber stub is used).

The clamping assembly 11 comprises a housing 20 and a platform 30 disposed in the housing 20 and being fixed therein both radially and axially. The platform 30 defines a fiber-receiving channel 34 along the optical axis 17 to receive at least one fiber. At least a portion of the fiber-receiving channel 34 is accessible from the top. The clamping assembly 11 also comprises first and second cam members 40, 50. The first cam member 40 has a first cam surface 41, and is disposed in the housing 20 above and adjacent to the fiber-receiving channel 34. The first cam member 40 is radially actuateable within the housing 20. The second cam member 50, which is preferably a sleeve 50a, is disposed in the housing 20 and is axially slidable therein. The second cam member 50 has a second cam surface 51 adjacent the first cam surface 41 and configured such that, upon forward motion of the second cam member 50 relative to the first cam member 40, the first cam member 40 is urged downward as a result of a camming action between the first and second cam surfaces, 41, 51. The clamping assembly also comprises an actuator 60 disposed slidably within the housing 20 behind and adjacent to the second cam member 50. The actuator 60 is configured, such that, when moved forward, it forces the second first cam member 50 forward relative to the first cam member 40. Each of these components is described below in greater detail.

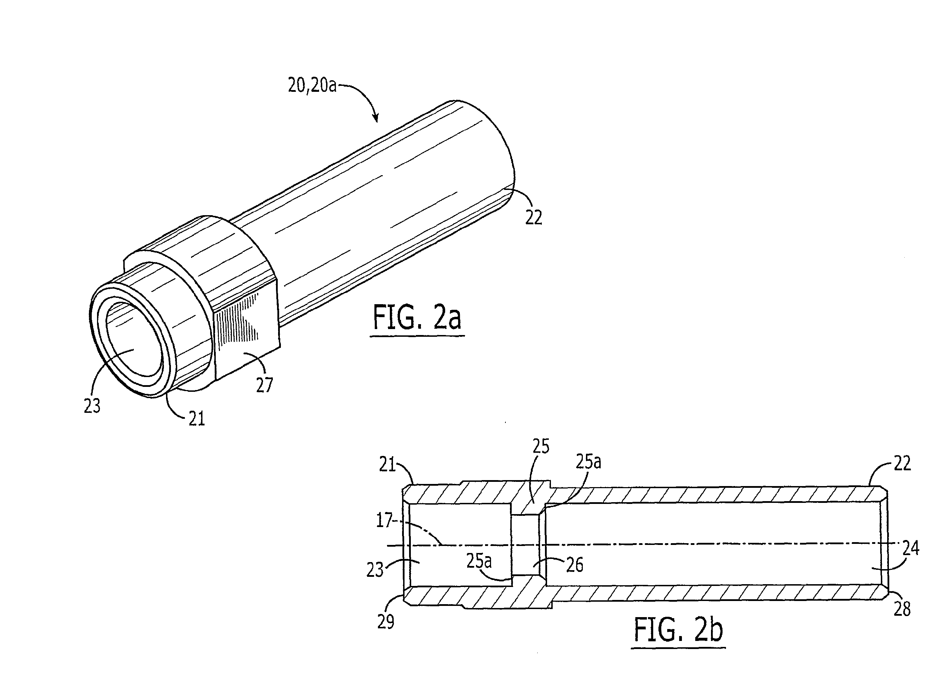

As shown in Figure 1a, the housing 20 of the clamping assembly 11 is preferably a capillary base 20a which in adapted to receive a ferrule in its front end. Referring to Figures 2a and 2b, the capillary base 20a of Figure 1a is shown in a perspective view and an axial cross-sectional view, respectively. As with the connector, the capillary base has a top/bottom and front/back orientation with the front of the capillary base being to the left of the page and the top being to the top of the page.

The function of the capillary base 20a is to provide an integrated housing which holds and aligns the ferrule with the clamping assembly along the optical axis 17. The capillary base has a front end 21 defining a first cavity 23 and a back end 22 defining a second cavity 24. Separating the first and second cavities is an intermediate portion 25 which has a front face 25a and a back face 25b and a passageway 26 between the first and second cavities 23, 24. The passageway 26 allows the fiber to pass along the optical axis 17.

The first cavity 23 is configured to receive a ferrule. Accordingly, the first cavity 23 has a radial cross-sectional shape similar to that of the intended ferrule. For example, it may have a circular cross section for a single-fiber ferrule such as those used in the LC, ST, MU and SC connectors, or a rectangular cross section for multifiber ferrules such as those used in the MTRJ, the MPX, the MPO, and other MT-type connectors. The ferrule is received in the first cavity 23 such that the back end of the ferrule is proximate to the front face 25a of the intermediate portion 25. The ferrule may be secured to the capillary base using traditional adhesives such as epoxy or by an interference fit between the ferrule and the capillary base.

The back end of the capillary base 20a houses the clamping assembly. Accordingly, the second cavity 24 is adapted to receive the other components of the clamping assembly 11 (described in greater detail below). In the preferred embodiment, the cross section of the second cavity is similar to that of the first cavity.

In a preferred embodiment, the capillary base 20a has an asymmetrical outer surface to provide rotational alignment within the connector housing. In an embodiment shown in Figure 2a, this asymmetrical surface includes a planar surface 27 which registers against a corresponding planar surface in the connector housing so that the capillary base 20a is rotationally oriented within the connector housing.

In a preferred embodiment, capillary base 20a is a unitary component, and, more preferably is machined such that the critical dimensions about the optical axis 17 can be established in a single, relatively simple, step. Preferably, the capillary base is formed using a machining process. The capillary base 20a preferably comprises a machinable material such as aluminum.

In a preferred embodiment, the connector shares several components with the prior art crimp-type connectors such as the LightCrimp® connector. Having components in common with prior-art connectors is preferable since existing molds and assembly equipment can be used to reduce capital and changeover costs.

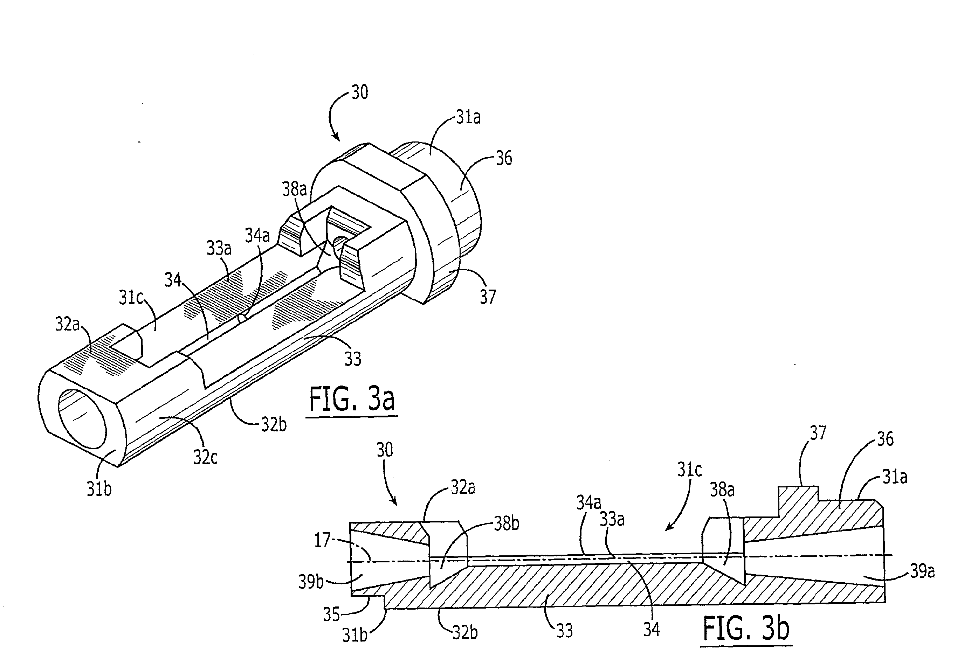

Referring to Figure 3a and 3b, perspective and axial cross-sectional views of the platform 30 are shown, respectively. As with the other components, the platform 30 has a top/bottom and front/back orientation. In Figures 3a and 3b, the front of the connector is toward the right of the page and the top is toward the top of the page.

The function of the platform 30 is to provide a stable base within the clamping assembly to hold and align the fiber before, during and after the clamping operation. In a preferred embodiment, the platform 30 is held securely within the capillary base 20a such that radial and axial movement of the fiber-receiving channel 34 is essentially prevented. The platform 30 comprises a substrate portion 33 which provides a sturdy base upon which the fiber will be clamped and held secure in the connector. The substrate portion 33 has a substantially planar substrate surface 33a into which is formed a fiber-receiving channel 34. The fiber-receiving channel provides a pathway along which the fiber runs. In this embodiment, the fiber-receiving channel 34 is a V-groove, although alternative fiber-receiving channel configurations are within the scope of the invention and may include, for example, a U-groove or a channel formed by members extending up from the substrate surface 33a.

Another function of the platform 30 is preferably to provide a platform for mating the fiber stub and the fiber. Specifically, the fiber stub and the fiber preferably are butt jointed at point 34a in fiber-receiving channel 34. It should be obvious that the location of point 34a can be anywhere along the fiber-receiving channel although generally the middle portion is preferred such that the clamping force on the fiber stub and the terminating fiber is approximately the same.

The substrate portion 33 around the fiber-receiving channel should comprise a material which is somewhat compliant to allow for some degree of impression by the fiber during actuation. That is, once the assembly is actuated and the fiber is pressed into the fiber-receiving channel, it is preferred that the material defming the channel deforms slightly around the fiber to increase the surface area contact with the fiber and thereby hold it more securely. Although a compliant material is preferred, it is within the scope of the present invention that other, harder materials may be used depending upon the application. For example, in certain situations, it may be preferable to use a silicon-based material with one or more fiber-receiving channels etched into it. Although silicon tends to be hard and noncompliant, it is capable of being etched with extreme precision. The benefits of this precise etching may outweigh the drawbacks of the silicon's hardness.

The substrate portion 33 also comprises front and back channel lead-in cavities 38a, 38b at the front and back of the fiber-receiving channel 34, respectively. The front channel lead-in cavity 38a serves to guide the fiber stub into the fiber-receiving channel, while the back channel lead-in cavity 38b serves to guide the terminating fiber into the fiber-receiving channel. By guiding the fiber into the fiber-receiving channel, the chance of damaging either the fiber stub or the terminating fiber is reduced.

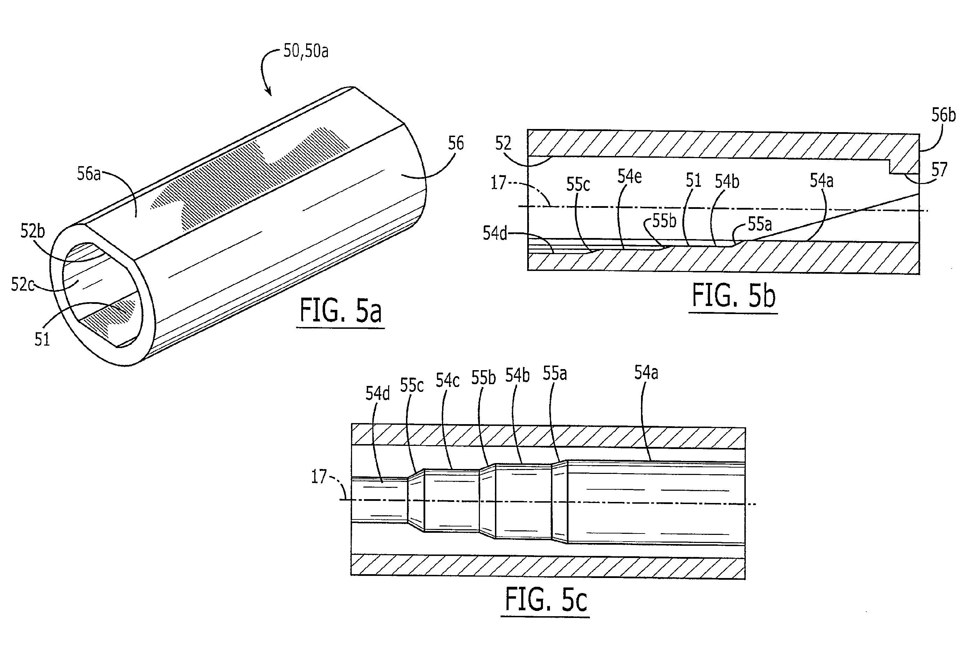

The platform 30 also comprises top and bottom surfaces 32a and 32b, which are preferably planar surfaces. Planar surfaces are preferred since they are readily machined and easily measured to ensure compliance with specific tolerance limits. As discussed below with respect to Figure 5, the surfaces 32a and 32b contact corresponding surfaces 51, 52 in the sleeve 50a and slide along the sleeve surfaces during actuation. Aside from enhancing manufactureability, these planar surfaces also facilitate a simple axial motion of the sleeve relative to the platform 30 rather than a more complicated taper arrangement as was used in the prior art.

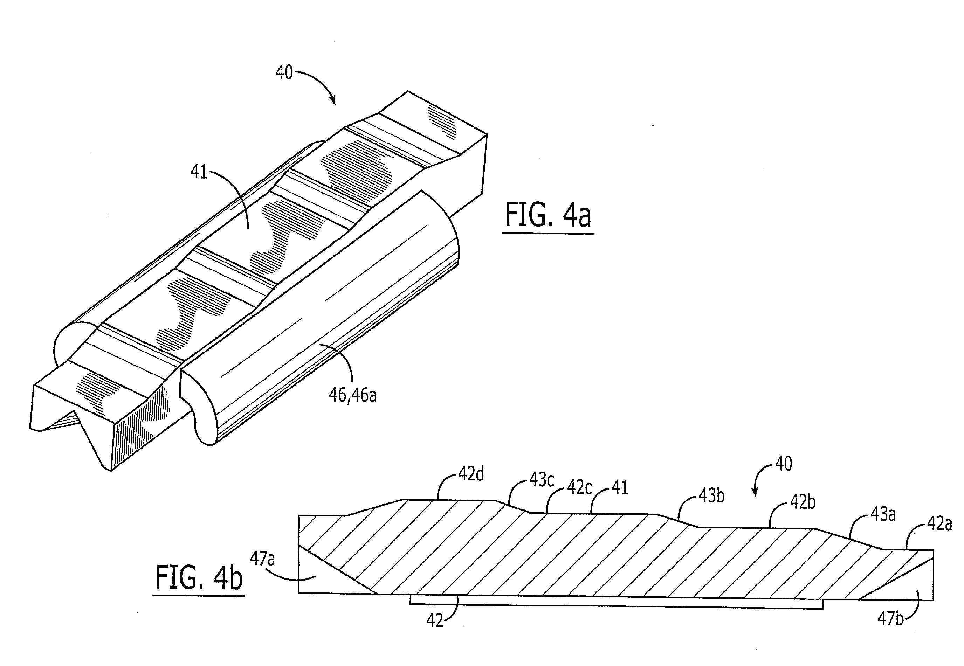

The top surface 32a of the platform 30 defines an opening 31c at its top to allow access to the fiber-receiving channel 34 from the top. The opening 31c is adapted to receive the first cam member 40 (see Figure 4). In a preferred embodiment, the platform 30 also comprises a stop-receiving cavity 35 along its bottom surface 32b to receive a corresponding stop 57 of the sleeve 50a (see Figure 5b). The stop 57 prevents the sleeve 50 from being assembled backwards onto the platform 30.

The platform 30 also comprises front and back end portions 31a, 31b. These end portions serve two primary functions. First, they serve to align and hold the platform 30 such that its fiber-receiving channel 34 is coaxial with the optical axis 17. Second, they provide initial lead-in cavities 39a, 39b into the more-narrow channel lead-in cavities 38a and 38b, respectively, in the substrate portion of the platform 30.

The front portion 31a comprises a protrusion 36 and a flange 37. The protrusion 36 is configured to fit snugly in the passageway 26 of the capillary base 20a. By fitting snugly in the passageway, the protrusion 36 essentially eliminates radial movement of the front end 31a of the platform. The flange 37 cooperates with the intermediate portion 25 of the capillary base 20a such that, when the flange abuts the back face 25b of the intermediate portion 25, the fiber-receiving channel 34 is aligned with the optical axis 17. Therefore, the combination of the protrusion 36 and the flange 37 at the first end 31a of the platform 30 provides alignment of the fiber-receiving channel along the optical axis 17.

The flange 37 also prevents forward axial movement of the platform 30 into the passage 26 during the actuation process. Given the rather significant contact between the flange 37 and the back face 25b of the intermediate portion 25, the likelihood of having the platform 30 extrude into the passage 26 is very remote. Accordingly, by aligning and holding the front portion 31a of the platform and preventing its radial and axial movement, the protrusion 36 and flange 37 serve to reduce bending and distortion and even breakage of a fiber between the platform and the ferrule. This is an important advantage over the prior art in which the clamping members were relatively free to move allowing the portion of fiber between the clamping members and the ferrule to bend often to the point of breaking.

The back portion 31b of the platform 30 is supported by the sleeve 50a. Specifically, the top surface 32a and bottom surface 32b at the back portion 31b contact corresponding surfaces on the sleeve such that the back portion 31b cannot move vertically. Likewise, the sides 32c of the platform 30 contact the sides 52c of the sleeve 50a so that the back portion 31b cannot move horizontally. One skilled in the art will appreciate that the combination of the front portion 31a with its protrusion 36 and flange 37 and the back portion 31b with its top and bottom surfaces 32a and 32b provide stability for the platform 30 before, during and after actuation. By securing both ends of the platform from moving either axially and radially, the fiber-receiving channel 34 remains precisely positioned along the optical axis 17.

In a preferred embodiment, the platform 30 is a unitary structure, and, more preferably, it is integrally molded. By integrally molding the platform 30 all critical dimensions (e.g., the distance between the fiber-receiving channel and each of the protrusion 36, flange 37 and top and bottom planar surfaces 32a and 32b) may be established in a single, relatively-simple, molding step.

Referring to Figures 4a and 4b, a perspective view and an axial cross-sectional view of the first cam member 40 of the connector 10 are shown, respectively. As with the other components of the connector 10, the first cam member as depicted in these drawings has a top/ bottom and front/back orientation with the front being toward the right of the page and the top being toward the top as depicted in Figure 4a, and with the front being toward the left of the page and the top being toward the top as depicted in Figure 4b.

The first cam member 40 functions as the actuateable component which works in cooperation with the second cam member 50 to translate axial force into radial force and to transfer this radial force to the fiber held in the platform 30 to secure the fiber to the connector 10. To this end, the first cam member 40 comprises a first cam surface 41 and a contact surface 42. The contact surface 42 preferably is a substantially planar surface and moves in a generally parallel fashion with respect to the substrate surface 33a so as to clamp the fiber and hold it in the fiber-receiving channel 34. Again, as with the top and bottom the planar surfaces 32a and 32b of the platform 30, the planar contact surface 42 is readily machined and verified for accuracy. Additionally, since the clamping assembly involves two planar surfaces approaching one another in a parallel fashion, the reliability and precision of this clamping assembly is superior to that of tapered or otherwise non planar contacting surfaces.

In a preferred embodiment, the contact surface 42 defines front and back lead-in cavities 47a, 47b. Lead-in cavity 47a cooperates with lead-in cavity 38a of the platform 30 to guide the fiber into the back of the platform/first cam member assembly, while lead-in cavity 47a cooperates with lead-in cavity 38b to guide the fiber stub into the front of the platform/first cam member assembly.

The first cam surface 41 is inclined upward from the back to the front. In a preferred embodiment, the first cam surface 41 comprises one or more planar surfaces. Planar surfaces are preferred to radial surfaces for a number of reasons. First, as mentioned above, they are more readily manufactured and measured for accuracy. Second, unlike the prior art crimp-type connectors which use radial cam surfaces, planar surfaces use the entire cam surface in the camming action. That is, in the prior art, radial cam surfaces make only line contact. Applicants find that a planar contact is preferred to line contact from the standpoint of dissipating the cam forces and reliability in actuation.

In a preferred embodiment, the first cam surface 41 is stepped, meaning that the slope of the cam surface is not constant. As used herein, the term "slope" refers to the customary ratio of vertical change over horizontal change. In a stepped cam surface, the slope along the cam surface changes from low slope portions, or dwell portions, to relatively high slope portions, or rise portions. In a preferred embodiment, the dwell portions are essentially parallel to the optical axis and, thus, are parallel to the contact surface 42. Having the dwell portion parallel with the contact surface simplifies manufacturing and provides benefits during actuation as described below.

In a preferred embodiment there is a sequence of dwell and rise portions. For example, in a particularly preferred embodiment as shown in Figure 4b, the cam surface comprises alternating dwell and rise portions 42, 43. Specifically, from back to front, the first cam surface 41 comprises a back dwell portion 42a and a back rise portion 43a, a first intermediate dwell portion 42b and a first intermediate rise portion 43b, a second intermediate dwell portion 42c and a second intermediate rise portion 43c, and finally a front dwell portion 42d. Although two intermediate dwell and rise sequences are shown in Figure 4b, it should be understood that any number of dwell and rise sequences can be used within the scope of the present invention. The function of these rise and dwell portions and their benefits will be explained in detail below with respect to the sleeve 50a and the operation of the connector 10.

In a preferred embodiment, the first cam member is upwardly biased from the platform 30. Such a configuration provides access for introducing a fiber into the fiber-receiving channel either from the front end in the case of the fiber stub or from the back end in the case of the terminating fiber. The first cam member is elevated above the substrate surface 33a so that access along the fiber-receiving channel 34 is not encumbered. In a preferred embodiment, the first cam member is urged upward but not so far that excessive space is left between the substrate surface 33a and the contact surface 42 to allow the fiber to escape from the fiber-receiving channel 34 and move unconstrained on the substrate surface. To this end, the first cam surface 41 of the first cam member and the second cam surface 51 of the sleeve 50a are configured to contact and limit the upward travel of the first cam member 40 relative to the platform 30.

The means 46 for urging the first cam member upward relative to the platform 30 can vary. Figure 4a depicts a preferred embodiment of the means 46 for urging the first cam member upward in which resilient members 46a extend down from the first cam member slightly below the contact surface 42. These resilient members 46a contact the substrate surface 33a and lift the first cam member such that the contact surface 42 is held away from the substrate surface 33a thereby creating space above the fiber-receiving channel. Being resilient, these members are readily deformed as the first cam member 40 is pushed down through the camming action of the first and second cam surfaces.

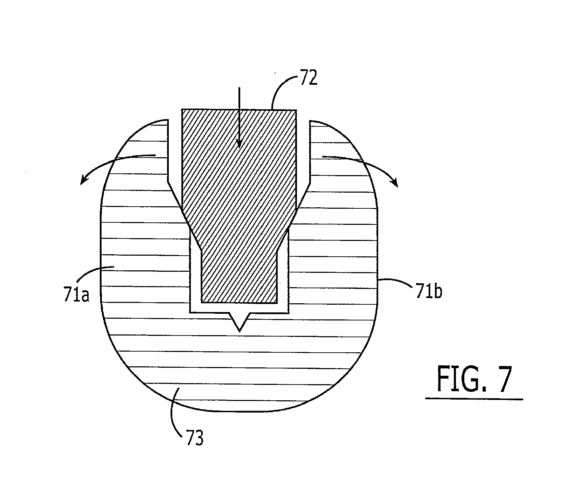

Although resilient members 46a are preferred, other configurations of the urging means are within the scope of the invention. For example, an alternative urging means may involve resilient members extending from the ends of the first cam member rather than from the sides. In yet another alternative, the urging means between the first cam member 40 and the platform 30 may be a living spring between the two components. That is, rather than having two distinct components as in the connector 10 described herein, the first cam member and the platform may be of a unitary design wherein the first cam member is attached to the platform via one or more resilient tabs. Yet another alternative involves compliant portions of the platform extending upward to urge the first cam member upward. For example, referring to Figure 7, a schematic is shown in which resilient side portions 71a and 71b extend up from the substrate portion 73 of the platform 70. Resilient side member 71a and 71b hold the first cam member 72 above the fiber-receiving channel at the appropriate height. Once the first cam member is forced down through the camming force, the resilient side member 71a and 71b deform or move outwardly to allow the first cam member to be pressed toward the substrate surface and fiber-receiving channel.

Since the principal function of the first cam member is to translate axial force to radial force and to apply that force to the fiber, the first cam member should be formed of a fairly compliant material that deforms and stores elastic energy to maintain contact with the fiber over a relatively large temperature range so as to absorb such forces. The first cam member may comprise any structurally robust material including, for example, a metal, ceramic, or polymeric material. Preferably, the first cam member comprises a polymeric material, and, more preferably, it comprises Ultem ® polyetherimide.

Referring to Figures 5a through 5c, the second cam member 50 is shown in its preferred embodiment as a sleeve 50a in a perspective view, an axial vertical cross-sectional view, and an axial horizontal cross-sectional view, respectively. As with the other components, the sleeve has a top/bottom and front/back orientation. As shown in Figures 5(a)-5(c) the front is toward the left of the page and the top is toward the bottom of the page.

The sleeve 50a has two primary functions. First, it acts as a complementary camming component to the first cam member 40 to translate axial force into radial force and thereby crimp the fiber to the platform. Second, in a preferred embodiment, the sleeve acts as a back stop to prevent the platform 30 from moving radially as a result of the first cam member applying radial force to the fiber contained in the fiber-receiving channel 34 of the platform 30.

The sleeve has an outer surface 56 which is designed to fit snugly within the second cavity. Preferably, the outer surface 56, has a planar portion 56a. The planar portion 56a serves to provide tolerance both between the sleeve and the second cavity and thereby allow the sleeve to slide within the cavity. Additionally, the planar portion 56a provides a register surface upon which the other planar surfaces (e.g., the second cam surface 51 and the bottom surface back rise) can be based. The outer surface 56 also comprises a back face 56b. The back face 56b provides a surface upon which the actuator 60 contacts to apply axial force to the sleeve to move it forward.

The interior of the sleeve 50a comprises a second cam surface 51 and a bottom surface 52. The second cam surface 51 is configured to complement the first cam surface 41, and, thus, is inclined from the back to the front like the first cam surface. As used herein, the terms "compliment" or "complimentary" in the context of cam surfaces refers to a substantial matching of inclines between cam surfaces so that the axial motion of one cam surface relative to the other results in radial force between the surfaces. Accordingly, the second cam surface 51 preferably comprises one or more planar surfaces, and even more preferably, comprises a stepped inclined surface similar to that described with respect to the first cam surface 41. Specifically, the stepped inclined surface comprises a number of alternating dwell and rise portions. Referring to Figure 5b and 5c, from back to front, the second cam surface 51 comprises a back dwell portion 54a and a back rise portion 55a, a first intermediate dwell portion 54b and a first intermediate rise portion 55b, a second intermediate dwell portion 54c and a second intermediate rise portion 55c, and finally a front dwell portion 54d. Preferably, dwell surfaces 54a, 54b, 54c and 54d are essentially parallel to the optical axis.

The first and second cam surfaces 41, 51 cooperate such that there is only a camming action in which axial motion of the sleeve is translated into radial motion of the first cam member when a rise portion meets a corresponding rise portion. Conversely, when a rise portion is not sliding against a rise portion and only dwell portions are in contact, there is no camming action since the dwell portions are parallel to the optical axis in the preferred embodiment. Rather, the dwell portions simply slide over one another so there is little if any force transferred from the sleeve to the first cam member, and, in turn, to the platform. This is a significant feature of the preferred embodiment since it limits the amount of axial force that can be applied to the platform 30 and, thereby, avoids the problems of over actuating the connector and bending or breaking the fiber contained in the connector.

The bottom surface 52 is profiled to receive the bottom portion of the holder during actuation and thereby act as a back stop against the radial force applied to the platform 30 as a result of the first and second cam surfaces sliding over one another. Alternatively, rather than acting as a backstop for the platform, the clamping assembly 11 could be configured to allow the housing 20 to act as the backstop. For example, the sleeve may have a U-shape cross section and may coordinate with the platform such that the bottom surface of the platform would be at the opening of the "U" and in contact with the inner surface of the housing. This way, the capillary base would act as the backstop to resist the radial force being imparted to the platform from the first cam member.

Preferably, bottom surface back rise is a planar surface. As mentioned above, planar surfaces are more readily manufactured and verified as being within tolerance. The bottom surface back rise preferably comprises a stop 57 to polarize the sleeve and prevent it from being inserted backwards in the capillary base 20a. Upon full actuation of the sleeve, at least a portion of the stop 57 is received in the corresponding stop-receiving cavity 35 of the platform 30.

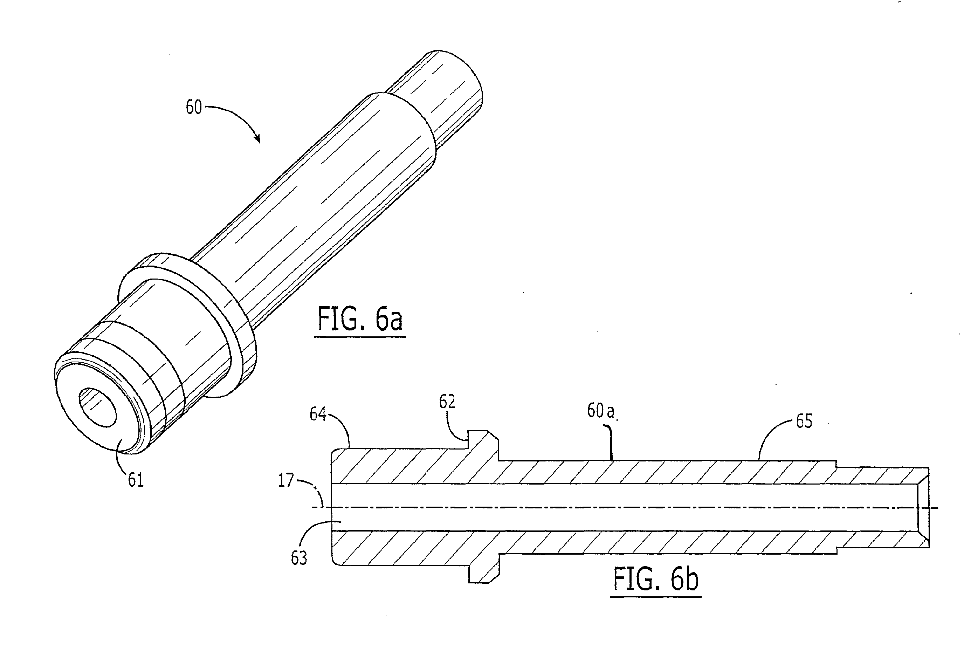

Referring to Figures 6a and 6b, a perspective view and axial cross-sectional view of the actuator 60 are shown. The actuator has a front and back orientation, and, as shown in Figures 6a and 6b, the front is toward the left of the page.

The function of the actuator 60 is to provide a readily-engageable surface for the user to engage with a clamping tool and then to transfer the force applied by the clamping tool as an axial force to the second cam member to effect the clamping operation. In the preferred embodiment, the actuator 60 is an elongated plunger 60a comprising a front end 64 and a back end 65. The front end 64 comprises a front face 61 which is configured to urge against the back face 56b of the sleeve 50a during the actuation process. The back end 65 protrudes from the connector housing 12 and is crimped onto the buffer of the optical fiber (not shown) to provide additional fiber retention. The plunger also comprises a passage 63 which runs along the optical axis and provides for the passage of a buffered section of fiber. The plunger 60a also comprises a flange 62. The flange is configured to contact the back face 28 of the capillary base 20a (see Figure 2) once actuation is complete. This feature along with the other stops described above prevent the over actuation of the clamping assembly, thereby avoiding damage often associated with such over actuation.

In a preferred embodiment, the plunger 60a is the same plunger as used in prior art crimp-type connectors, such as the LightCrimp® connector. Having components in common with prior-art connectors is preferable since existing molds and assembly equipment can be used to reduce capital and changeover costs.

Although the actuator is described herein as a discrete plunger, it should be understood that it is within the scope of the present invention that the actuator and the second cam member may be embodied in a single unitary component. Further, this unitary component may be integrally molded to effect all critical alignments in a single manufacturing step.

The components of the clamping assembly may comprise any structurally robust material including, for example, a metal, ceramic, or polymeric material. Preferably, one or more components comprise either a thermoplastic material for example PES, PEI, PBT or LCP, or a thermoset material, such as epoxy or phenolic resins. More preferably, one or more components comprise Ultem ® polyetherimide.

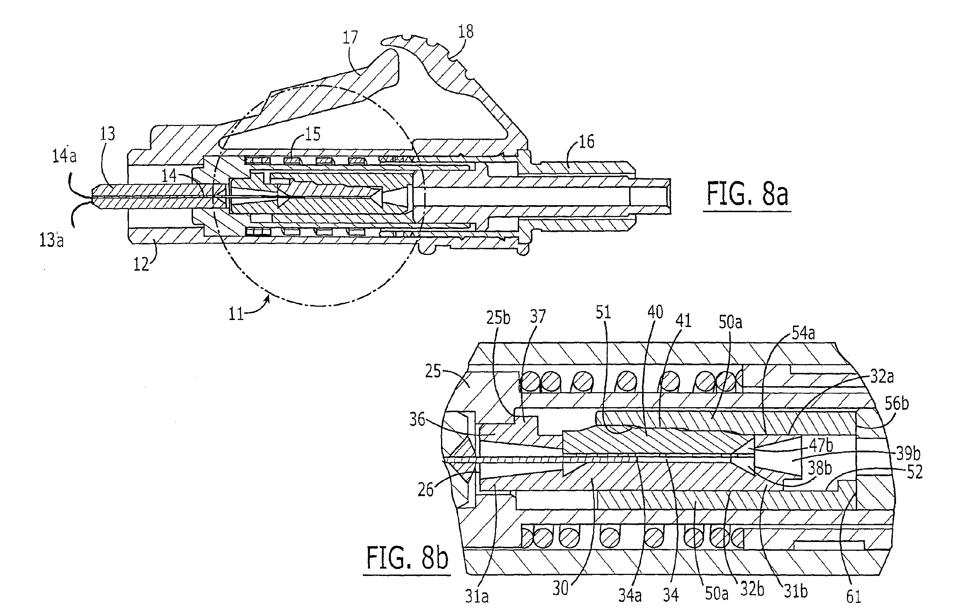

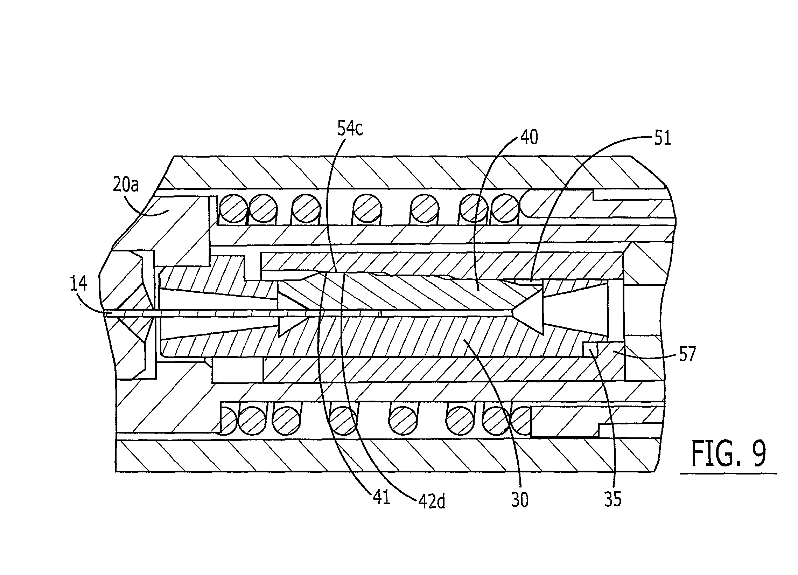

The operation of the connector 10 and the interplay of the various components will now be discussed with respect to the pre-actuated assembled connector 10 depicted in Figures 8a, 8b, and the post-actuated assembled connector 10 depicted in Figure 9. Figure 8a shows an axial cross-sectional view of the connector 10, fully assembled and in a pre-actuation position, while Figure 8b, shows a detailed section of the clamping assembly of Figure 8a. In this position, the platform 30 is prevented from moving forward by virtue of the flange 37 against the back face 25b of the intermediate portion 25. The front portion 31a of the platform 30 is prevented from moving radially by virtue of the protrusion 36 being fit snugly into the passageway 26 in the front end. Likewise, the back end 31b is disposed snugly within the sleeve 50a--the top surface 32a of the platform contacts the back dwell portion 54a of second cam surface 51 the sleeve 50a, while the bottom surface 32b of the platform contacts the bottom surface 52 of the sleeve. Hence, the platform cannot move vertically. Along the interface of the sleeve 50a and the platform 30, the curved sides 32c of the platform (see Figure 3) contact the corresponding curved side walls 52c of the sleeve 50a (see Figure 5) to prevent the platform from moving horizontally.

The plunger 60a is behind the sleeve such that its forward face 61 is in contact with the back face 56b of the sleeve. The plunger 60a extends out behind the back of the connector 10 and provides a tubular section that is crimped onto the buffer (coating) of the optical fiber. In the preferred embodiment the crimped section is hexagonal in cross section. Other cross sectional shapes could be used, for example, circular or octagonal.

To facilitate insertion of the terminating fiber (not shown) in the fiber-receiving channel 34 of the platform, the first cam member 40 is urged upward from the platform 30 such that the first cam surface 41 of the first cam member 40 contacts the second cam surface 51 of the sleeve 50a. By urging the first cam member upwardly from the platform access is provided to fiber-receiving channel 34. The sleeve 50a is axially disposed with respect to the first cam member 40 such that, when the first cam member 40 is urged upward, the first and second cam surfaces 41, 51 meet so that the back dwell portions, first intermediate dwell portions, second intermediate dwell portions, and end dwell portions of the first and second cam surfaces 41, 51 contact, respectively. This particular contact between the first and second cam surfaces allows the first cam member to be urged upward but to a limited extent. That is, the first cam member is not raised relative to the substrate surface such that an excess amount of space is created above the fiber-receiving channel such that the fiber is free to escape from the fiber-receiving channel. Rather, the first cam member is raised so that the space between the contact surface and the substrate surface is high enough to provide access through the fiber-receiving channel but small enough to contain the fiber in the fiber-receiving channel. In a preferred embodiment, the space between the contact surface and the substrate surface in the pre-actuated position is less than the diameter of the bare fiber.

Further facilitating insertion of the terminating fiber in the fiber-receiving channel 34 are the back channel lead-in cavities, formed by the combination of the platform back lead-in cavity 38b and the first cam member back channel lead-in cavity 47b, and the initial back lead-in cavity 39b formed by the back portion 31b of the platform. In the pre-actuation state, the combination of the upwardly urging first cam member, the particular contact between the first and second cam surfaces, and the initial and channel lead-ins, facilitates the simple insertion of the terminating fiber in the connector 10.

The terminating fiber (not shown) is prepared by removing the buffer from the bare fiber and cleaving the end to produce a smooth low loss facet to optically couple with another fiber. This is a well known process. Where the optical fiber cable is of a reinforced jacketed type, the buffer stripping and cleaving is preceded by stripping the cable jacket and cutting the strength members contained within the jacket to length. Next, the terminating fiber, with bare fiber exposed at the end, is inserted into the back of the connector 10. The fiber passes initially though the passage 63 of the plunger 60 before the fiber end is introduced into the initial back lead-in cavity 39b of the back portion of the platform. The initial back lead-in cavity 39b funnels the fiber into the channel lead-in cavity (defined by cavities 38b, 47b) which, in turn, funnels the fiber into the fiber-receiving channel 34.

In a preferred embodiment, the bare fiber is pushed along the fiber-receiving channel until it contacts the back end face of the fiber stub at a median point 34a between the front and back ends of the fiber-receiving channel 34. Alternatively, in embodiments in which the optical coupling with the fiber stub occurs in the ferrule, the fiber is pushed through the entire length of the fiber-receiving channel and into the ferrule. In embodiments in which there is no fiber stub used at all, the fiber is pushed through the ferrule to the ferrule end face wherein the end of the fiber is positioned to be parallel to the end face of the ferrule.

Once the fiber is correctly situated in the connector 10, the clamping assembly is actuated to hold the fiber in that position. To that end, connector 10 is placed in a clamping tool (not shown) such that a first portion of the clamping tool contacts a front face 29 on the capillary base 20a, and a second portion of the clamping tool contacts the back face 16a of the rear housing 16 . Actuation of the tool results in first and second portions moving toward each other which thereby causes the forward movement of the rear housing 16 relative to the capillary base 20a. This relative motion causes the forward motion of the plunger and thus the sleeve 50a relative to the first cam member 40, thereby causing a camming action between the first and second cam surfaces 41, 51 so that the first cam member 40 is urged downward into the stationary platform 30 to thereby effect the clamping of the terminating fiber to the platform.

The post-actuation state of the connector is described herein with reference to Figure 9 which shows the clamping assembly in detail. The post-actuation state of the connector is characterized by one or more conditions. For example, the flange 62 meets or is close to the back end 28 of the capillary base 20a. The sleeve is moved forward relative to the platform to the extent that stop 57 is received in the stop-receiving cavity 35. Additionally, the cam surfaces are moved axially relative to one another such that the final dwell portion 42d of the first cam surface 41 comes in contact with the second intermediate dwell portion 54c of the sleeve 20a. It should be understood that while the dwell portions of the first and second cam surfaces are in contact, axial movement of the second cam member relative to the first cam member will have little effect on the first cam member. Thus, during the contact of the dwell surfaces, there is very little force transferred from the sleeve 20a into the first cam member/platform assembly and thus into the connector 10 itself. This is an important advantage over the prior art in which excessive axial forces often resulted in the clamping members being extruded into the passageway of the capillary base thereby resulting in fiber bending and/or breakage.

Once actuated, the projection on the rear portion of the plunger is then crimped to grip the fiber buffer. Where a jacket and strength members are present, a crimp sleeve is used to attach the strength members to the connector rear body and to grip the cable jacket.

After actuation, the terminating fiber is held securely in place by the clamping force between the platform 30 and the first cam member 40. This force is sufficient to prevent the terminating fiber from being extracted from the terminator 10 under normal forces. Additionally, if a fiber stub 14 is used, this clamping force will also serve to hold the fiber stub secure in the platform abutting the terminating fiber so as to achieve an efficient optical coupling between the two.

Thus, the clamping assembly of the present invention provides for a relatively simple-to-manufacture connector system which is robust and tolerant of variations in terminating styles and techniques in the field which have previously led to fiber bending and/or breakage in prior art connector systems.

## Claims

1. A small form factor, field-installable optical connector (10) comprising:
a small form factor connector housing (12) having a front and a back orientation;
a ferrule (13) disposed in said connector housing (12);
a clamping assembly (11) disposed in said connector housing (12) rearward of said ferrule (13) and adapted to receive and retain a terminating fiber;
a resilient member (15) disposed in said connector housing (12);
and a rear body (16) disposed at a rear end of said connector housing (12) and
configured to provide a backstop against which said resilient member (15) can press to bias said ferrule (13) and said clamping assembly (11) forward.

2. The connector (10) of claim 1, wherein said resilient member (15) is a flat spring.

3. The connector (10) of claim 1 or 2, wherein said connector housing (12) is a unitary structure.

4. The connector (10) of claim 3, wherein said connector housing (12) is integrally molded.

5. The connector (10) of any preceding claim, wherein said connector housing (12) comprises a latch (17) and a latch actuator (18).

6. The connector (10) of any preceding claim, wherein said connector (10) is an LC-type connector.

7. The connector (10) of any preceding claim, further comprising a fiber stub (14) extending rearward from said ferrule (13).

8. The connector (10) of claim 7, wherein said clamping assembly (11) receives at least a portion of said fiber stub (14) extending from said ferrule (13).
